# EUROPEAN PATENT APPLICATION

(11) **EP 2 071 845 A1**
(43) Date of publication of application: **17.06.2009**
(21) Application number: 07791656.7
(22) Date of filing: 31.07.2007
(51) Int. Cl.: H04N 7/173, H04H 1/00, H04L 29/08

(54) **DVB-H SIGNAL BIT RATE CONVERTING APPARATUS AND METHOD**

(30) Priority: 29.09.2006 JP 2006266896
(71) Applicant: Leader Electronics Corp., Yokohama-shi, Kanagawa 223-8505 (JP)
(72) Inventor: KOBAYASHI, Kazumi, Yokohama-shi, Kanagawa 223-8505 (JP); AKADA, Susumu, Yokohama-shi, Kanagawa 223-8505 (JP); HIRANO, Sayo, Yokohama-shi, Kanagawa 223-8505 (JP)
(74) Representative: Hartz, Nikolai
(86) International application number: PCT/JP2007/064971
(87) International publication number: WO 2008/041410

(57) **Abstract**

A bit rate converting apparatus suitable for a DVB-H signal which does not have a function of rewriting a PCR value comprises means (42) for receiving a TS signal of a DVB-H standard for storage in accordance with a first bit rate, means (46) for sequentially generating NULL packets in accordance with a second bit rate, and means (45) for outputting a packet which forms part of the stored TS signal from the means (42) and the NULL packet from the means (46) in accordance with the second bit rate. The apparatus may further comprise means (51) for receiving the TS signal of the DVB-H standard to remove NULL packets from the TS signal. Alternatively, the apparatus may further comprise means (61) for receiving the TS signal of the DVB-H standard to pass only a packet representative of a program which constitutes the TS signal, and a PSI/SI packet.

## Description

### TECHNICAL FIELD

The present invention relates to an apparatus for and a method of converting the bit rate of a TS (Transport Stream) signal conforming to the DVB (Digital Video Broadcasting) - H (Handheld) standard, and more particularly, to an apparatus for and a method of increasing or decreasing the bit rate of an input TS signal.

### BACKGROUND ART

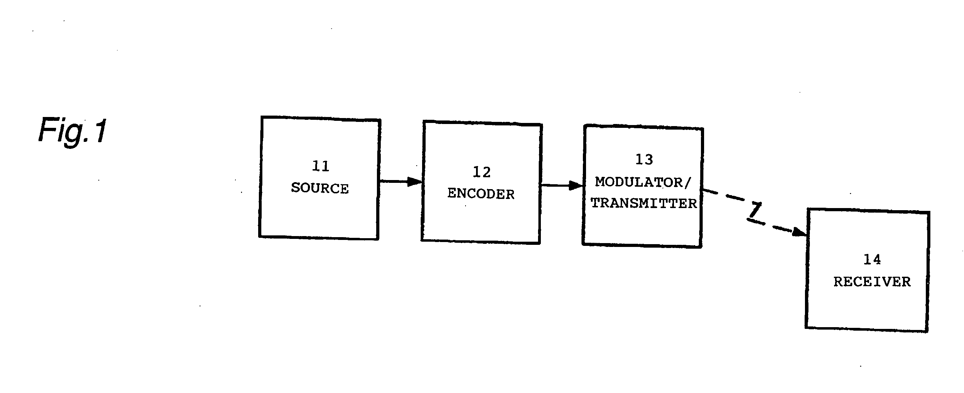

Fig. 1 illustrates an exemplary system for creating digital terrestrial broadcasting waves. As illustrated in Fig. 1, a source 11 outputs analog or digital source data (for example, video data, audio data or the like) to an encoder 12. The encoder 12 generates an MPEG2TS signal from the source data based on predetermined conditions (for example, the bit rate and the like). A modulator/transmitter 13 modulates the MPEG2TS signal based on desired transmission conditions to generate a digitally modulated signal. The desired transmission conditions include, for example, a transmission system (such as DVB-T (terrestrial)), a modulation scheme (such as QPSK, 16QAM, 64QAM), a bandwidth (such as 6 MHz, 7 MHz, 8 MHz), a convolution encoding rate (such as 1/2, 2/3, 3/4, 5/6, 7/8), a guard interval ratio (such as 1/4, 1/8, 1/16. 1/32), and the like. The modulator/transmitter 13 further converts the frequency of the digitally modulated signal to generate an RF broadcast wave. A receiver 14 receives an RF broadcast wave, displays an image on a display unit of a receiving apparatus, and outputs sound from an output unit of the receiving apparatus. For testing the receiver 14, it is necessary to confirm whether or not the receiver 14 normally operates even if the desired transmission conditions are changed.

Incidentally, the bit rate of a MPEG2TS signal depends on desired transmission conditions. Specifically, the bit rate is 4.976471 [bits/sec] when the transmission system is DVB-T; the modulation scheme is QPSK; the bandwidth is 8 MHz; the convolution encoding rate is 1/2, and the guard interval ratio is 1/4, respectively. Here, if the modulation scheme is changed from QPSK to 64QAM within the desired transmission conditions, the bit rate is changed from 4.976471 to 14.929412.

Accordingly, when the desired transmission conditions are partially changed, the encoder 12 is required to generate the MPES2TS signal with a bit rate which conforms to the changed desired transmission conditions. Alternatively, when the bit rate is not changed in the encoder 12, a bit rate converter must be provided between the encoder 12 and modulator/transmitter 13.

A bit rate converter is disclosed, for example, in Patent Document 1 shown below:
Patent Document 1: JP-11-205789A (Fig. 1)

### DISCLOSURE OF THE INVENTION

### PROBLEMS TO BE SOLVED BY THE INVENTION

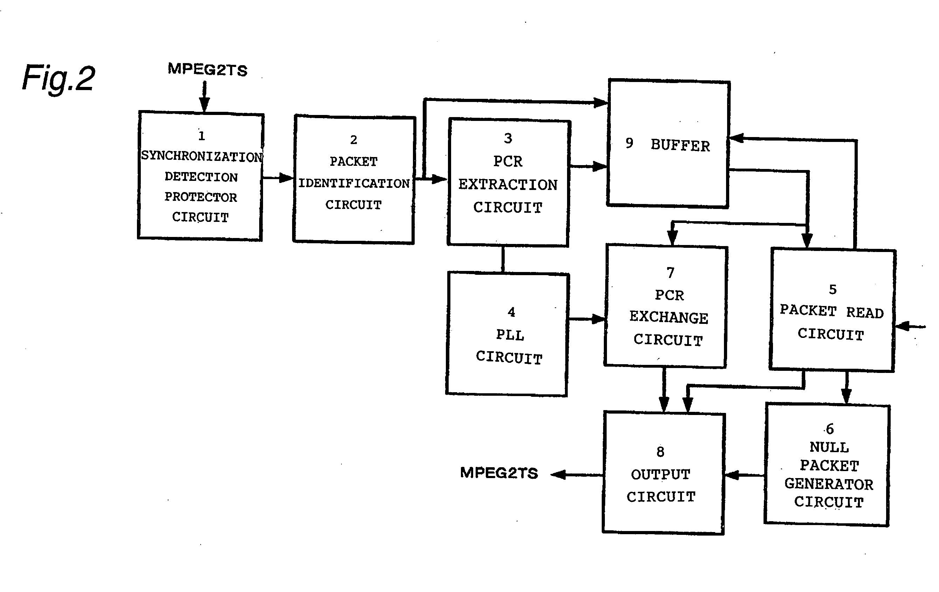

Fig. 2 illustrates a block diagram of the bit rate converter disclosed in Fig. 1 in JP-11-0205789A (Patent Document 1). When the bit rate is increased, the bit rate converter in Fig. 2 increases NULL packets within an input MPEG2TS signal using a NULL packet generator circuit 6. On the other hand, when the bit rate is reduced, the bit rate converter in Fig. 2 reduces NULL packets within an input MPEG2TS signal using a PCR extractor circuit 3.

The bit rate converter illustrated in Fig. 2 is required to comprise a PCR exchange circuit 7 because a PCR value must be rewritten in the MPEG2TS signal such as a DVB-T signal.

Also, when the bit rate is reduced in the bit rate converter, a desired bit rate may not be reached even if all NULL packets are removed. Stated another way, a bit rate which can be reached by the bit rate converter (a lower limit of the bit rate) depends on the number of NULL packets within an input MPEG2TS signal.

Objects of the present invention include at least one of the following items:
the provision of a bit rate converting apparatus (or) suitable for a TS signal (DVB-H signal) of DVB-H standard;
the provision of a bit rate converting apparatus (or method) which has a simple structure;
the provision of a bit rate converting apparatus (or method) which is capable of extending a lower limit of the bit rate; and
items which become apparent to those skilled in the art by referring to embodiments described below and accompanying drawings.

### MEANS FOR SOLVING THE PROBLEM

An apparatus of the present invention A bit rate converting apparatus which does not have a function of rewriting a PCR value, comprises means (42) for receiving a TS signal of a DVB-H standard for storage in accordance with a first bit rate, means (46) for sequentially generating NULL packets in accordance with a second bit rate, and means (45) for outputting a packet which forms part of the stored TS signal from the means (42) and the NULL packet from the means (46) in accordance with the second bit rate.

When the capacity of the TS signal stored by the means (42) exceeds a predetermined capacity, the means (45) can output the packet which forms part of the stored TS signal from the means (42). When the capacity of the TS signal stored by the means (42) does not exceed the predetermined capacity, the means (45) can output the NULL packet from the means (46).

The apparatus of the present invention can further comprise means (51) for receiving the TS signal of the DVB-H standard instead of the means (42), wherein the means (51) removes a NULL packet from the TS signal.

When the second bit rate is higher than the first bit rate, the means (51) can refrain from removing the NULL packet, and output the received TS signal of the DVB-H standard as it is to the means (42).

The apparatus of the present invention can further comprise means (61) for receiving the TS signal of the DVB-H standard instead of the means (42), wherein the means (61) passes only a PSI/SI packet and a packet representative of a program which forms part of the TS signal,

When the second bit rate is higher than the first bit rate, the means (61) can output the entire received TS signal of the DVB-H standard to the means (42).

The means (61) can pass only packets during a burst duration.

A method of the present invention comprises the steps of receiving a TS signal of a DVB-H standard in accordance with a first bit rate, passing only a packet representative of a program which forms part of the TS signal, and a PSI/SI packet, storing the passed packets, sequentially generating NULL packets in accordance with a second bit rate, and outputting one of the stored packet and the generated NULL packets in accordance with the second bit rate.

### BRIEF DESCRIPTION OF THE DRAWINGS

[Fig. 1]
   Fig. 1 illustrates an exemplary system for creating digital terrestrial broadcasting waves.
[Fig. 2]
   Fig. 2 illustrates a block diagram of a bit rate converter disclosed in Fig. 1 of JP-11-205789 (Patent Document 1).
[Fig. 3]

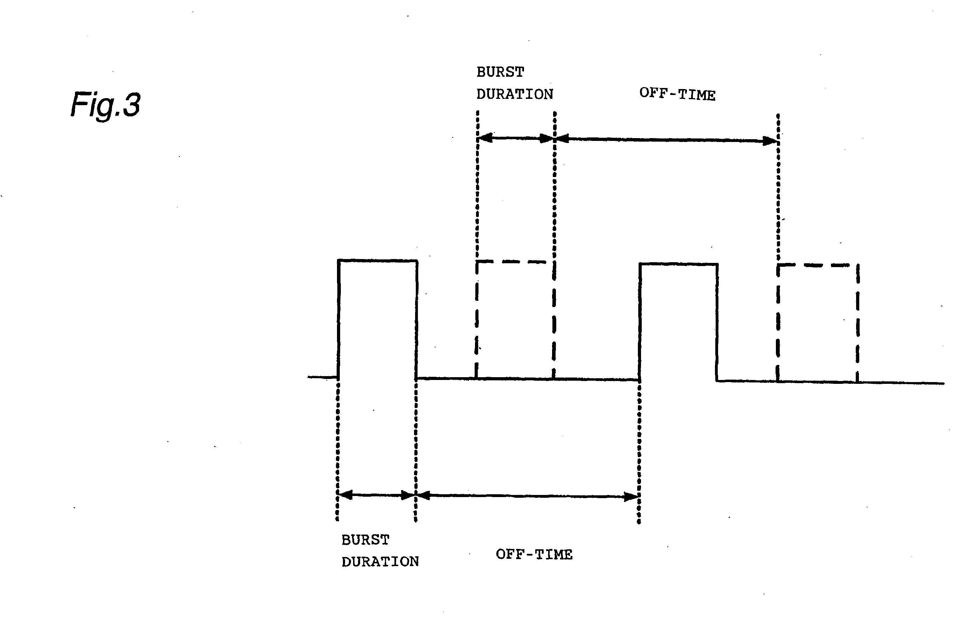

   Fig. 3 shows the structure of a TS signal of the DVB-H standard in a simple manner.
[Fig. 4]

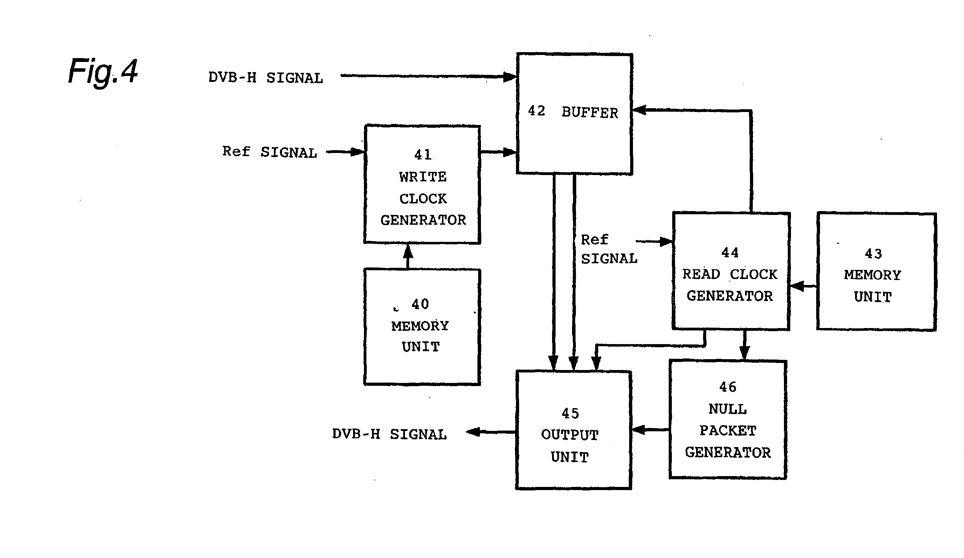

   Fig. 4 generally illustrates a block diagram of an apparatus for converting the bit rate of a DVB-H signal in accordance with the present invention.
[Fig. 5]

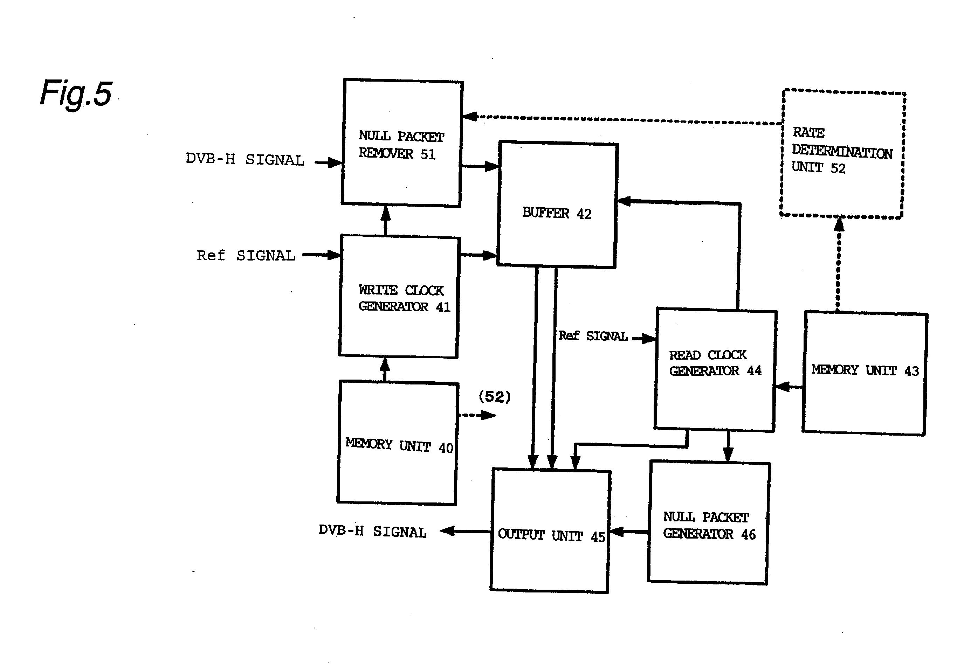

   Fig. 5 generally illustrates a block diagram of an apparatus for converting the bit rate of a DVB-H signal in accordance with a second embodiment of the present invention.
[Fig. 6]

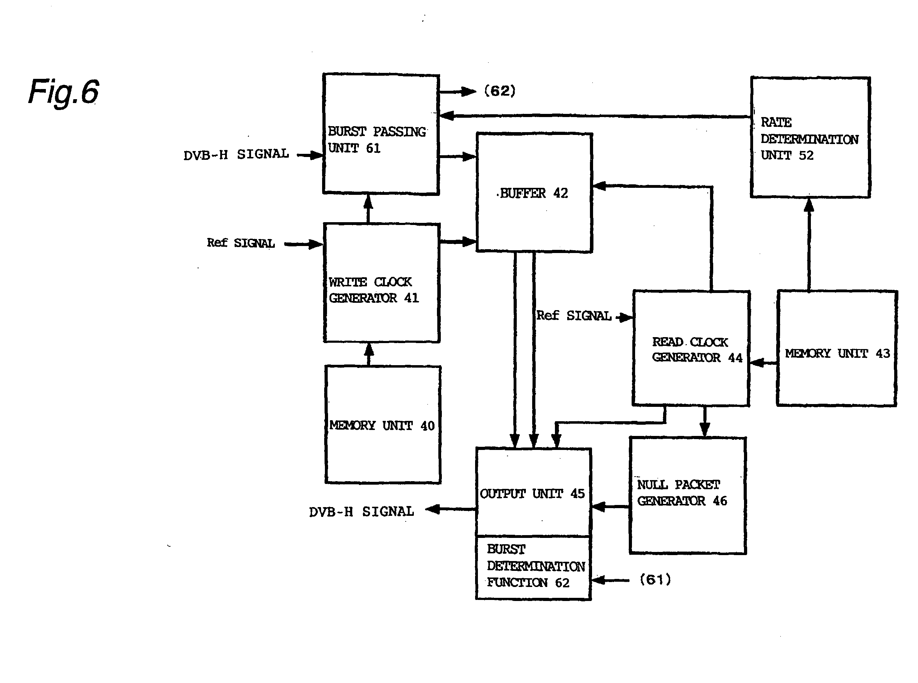

   Fig. 6 generally illustrates a block diagram of an apparatus for converting the bit rate of a DVB-H signal in accordance with a third embodiment of the present invention.
[Fig. 7]

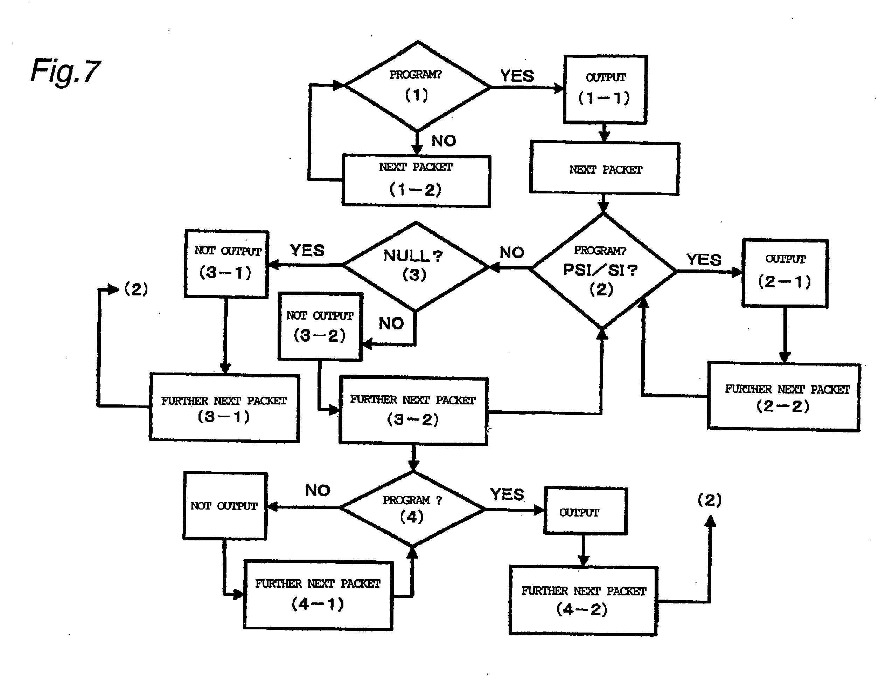

   Fig. 7 illustrates an exemplary operation of a burst passing unit 61 in Fig. 6.

### BEST MODE FOR CARRYING OUT THE INVENTION

Digital terrestrial broadcasting for portable devices (or mobile devices), for example, in Europe is required to conform to the TS signal of the DVB-H standard. The DVB-H standard is an improved version of the DVB-T standard for portable devices, and employs a technology termed "time slicing" in order to reduce the power consumption of a receiver circuit in a portable device 14. Fig. 3 shows the structure of the TS signal of the DVB-H standard (DVB-H signal) in a simple manner. As shown in Fig. 3, each program for portable devices exists only in a corresponding burst duration, and does not exist in a corresponding off-time. As such, when one program is received by the portable device, the receiver 14 of the portable device powers on only in a corresponding burst duration based on temporal information, called Delta-t, contained in the DVB-H signal, thereby reducing the power consumption. In consideration of such a circumstance, the present inventors have recognized that the receiver 14 is not affected by a deletion of programs other than a program which is being received by the receiver 14.

Also, the DVB-H signal is created on the basis of data in an IP format. Stated another way, the receiver 14 returns the DVB-H signal to IP-formatted data, and reproduces the IP-formatted data. Thus, packets within the DVB-H signal need not include a PCR value. In consideration of such a circumstance, the present inventors have recognized that a bit rate converting apparatus suitable for the DVB-H signal need not rewrite the PCR value.

### (First Embodiment)

Fig. 4 generally illustrates a block diagram of an apparatus for converting the bit rate of a DVB-H signal in accordance with the present invention. As illustrated in Fig. 4, the bit rate converting apparatus, which does not have a function of rewriting a PCR value, comprises a buffer 42, a Null Packet generator 46, and an output unit 45. A method of converting the bit rate of a DVB-H signal according to the present invention is executed in the following manner.

The buffer 42 receives a TS signal of the DVB-H standard on a packet-by-packet basis for storage therein in accordance with the bit rate of the TS signal of the DVB-H standard. The buffer 42 is for example, FIFO. The buffer 42 is applied with a write clock signal from a write clock generator 41 in order to receive the signal in accordance with a predetermined bit rate.

The write clock generator 41 generates a write clock signal which has a value (clock) [1/sec] equal to a predetermined bit rate (the bit rate of the TS signal of the DVB-H standard input to the buffer 42) [bits/sec] divided by 8 [bits]. Specifically, the write clock generator 41 comprises a PLL circuit and a frequency division circuit, and is applied with a reference clock signal (Ref signal). In this regard, the frequency division circuit has a division ratio which is determined by the clock of the reference clock signal (Ref signal) and the clock of the write clock signal (or a predetermined bit rate).

A memory unit 40 stores the predetermined bit rate (the bit rate of the TS signal of the DVB-H standard input to the buffer 42). The predetermined bit rate is entered or specified, for example, by the user.

The buffer 42 outputs the TS signal of the DVB-H standard input thereto to the output unit 45 on a packet-by-packet basis in accordance with the desired bit rate. The buffer 42 is applied with a read clock signal from a read clock generator 44 in order to output the signal in accordance with the desired bit rate.

The buffer 42 comprises a threshold such that it stops outputting the signal when the capacity of the stored signal falls below the threshold. The buffer 42 resumes outputting the signal when the capacity of the stored signal reaches the threshold or exceeds the threshold. The buffer 42 further applies the output unit 45 with a signal (threshold signal) indicative of whether or not the capacity of the stored signal is equal to or higher than the threshold.

The memory unit 43 stores the desired bit rate (bit rate of the TS signal of the DVB-H standard output from the output unit 45). In this regard, the desired bit rate (bit rate of the TS signal of the DVB-H standard output from the output unit 45) is determined by desired transmission conditions (a modulation scheme, a bandwidth, a convolution encoding rate, and a guard interval ratio), and is entered or specified, for example, by the user. In addition, the memory 43 is preferably integrated with the memory 40.

The read clock generator 44 reads the desired bit rate from the memory unit 43, and divides the desired bit rate [bit/sec] by 8 [bits] to generate a read clock signal which has the resulting value (clock) [1/sec]. Specifically, the read clock generator 44 comprises, for example, a PLL circuit and a frequency division circuit, and is applied with a reference clock signal (Ref signal). In this regard, the division ratio of the frequency division circuit is determined by the clock of the reference clock signal (Ref signal) and the clock of the read clock signal (or a desired bit rate).
It should be noted that the reference clock signal applied to the read clock generator 44 may be the same as or different from the reference clock signal applied to the write clock generator 41.

As described above, the read clock signal is applied to the buffer 42. As illustrated in Fig. 4, the read clock signal is also applied to the NULL packet generator 46 and output unit 45.

The NULL packet generator 46 sequentially outputs Null packets to the output unit 45 on a packet-by-packet basis based on the read clock signal. The NULL packet generator 46 comprises, for example, a counter for counting (0-203) the total number of bytes (204 bytes) which make up one packet; and a selector for selecting an output value (data which forms part of a NULL packet) depending on a counter value (2-203). Specifically, when the counter value indicates zero, for example, the selector output "0x47" (47 in hexadecimal notation) which represents a header of a packet. In this way, the selector outputs data representative of a NULL packet based on the counter value (0-203).

As described above, the output unit 45 is applied with packets output from the buffer 42; packets output from the NULL packet generator 46; the threshold signal output from the buffer 42 (signal indicating whether or not the capacity of a signal stored by the buffer 42 is equal to or higher than the threshold of the buffer 42); and the read clock signal output from the read clock generator 44. The output unit 45 monitors the threshold signal from the buffer 42. When the capacity of the signal stored by the buffer 42 is equal or higher than the threshold of the buffer 42 (packets are applied from the buffer 42), the output unit 45 outputs the packet from the buffer 42, but does not output the NULL packet from the NULL packet generator 46. When the capacity of the signal stored by the buffer 42 falls below the threshold of the buffer 42 (no packet is applied from the buffer 42), the output unit 45 outputs the NULL packet from the NULL packet generator 46. In this way, the output unit 45 outputs one of packets from the buffer 42 or NULL packet generator 46 based on the read clock signal, and as a result, the output unit 45 sequentially outputs packets on a packet-by-packet basis. Stated another way, the output unit 45 outputs a TS signal of the DVB-H standard which has been converted to a desired bit rate. The output unit 45 is, for example, a selector.

The bit rate converting apparatus illustrated in Fig. 4 is configured in a simple structure because it does not have a function of rewriting a PCR value. Accordingly, the bit rate converting apparatus can be manufactured at a low cost.

It should be noted that the bit rate converting apparatus illustrated in Fig. 4 does not have capabilities of reducing the bit rate of a received TS signal of DVB-H standard because of the lack of a feature for removing NULL packets within the received TS signal of the DVB-H standard. Stated another way, the buffer 42 will overflow.

### (Second Embodiment)

Fig. 5 generally illustrates a block diagram of an apparatus for converting the bit rate of a DVB-H signal in accordance with a second embodiment of the present invention. As compared with the bit rate converting apparatus illustrated in Fig. 4, the bit rate converting apparatus illustrated in Fig. 5 comprises a NULL packet remover 51.

The NULL packet remover 51 receives a TS signal of the DVB-H standard to remove NULL packets within the TS signal of the DVB-H standard. The NULL packet remover 51 is applied with a write clock signal from the write clock generator 41, receives the TS signal of the DVB-H standard on a packet-by-packet basis based on the write clock signal, and outputs packets, except for the NULL packets, within the TS signal of the DVB-H standard to the buffer 42.

Specifically, the NULL packet remover 51 determines whether or not a received packet is a NULL packet. When the received packet is a NULL packet, the NULL packet remover 51 does not output anything. When the received packet is not the NULL packet, the NULL packet remover 51 outputs the packet to the buffer 42 based on the write clock signal. More specifically, the NULL packet remover 51 extracts PID described in the received packet, and determines whether or not the extracted PID has "0x1FFF) (1FFF in hexadecimal notation) representative of the ID of the NULL packet.

The bit rate converting apparatus illustrated in Fig. 5 can reduce the bit rate of a received TS signal of the DVB-H standard because it comprises a feature for removing NULL packets within the received TS signal of the DVB-H standard. However, if there is a small number of NULL's contained in a received TS signal of the DVB-H standard, the buffer 42 can overflow in some cases. Stated another way, the bit rate which can be reduced by the bit rate converting apparatus illustrated in Fig. 5 depends on the number of NULL packets within a received TS signal of the DVB-H standard, and has a lower limit to the bit rate.

In this regard, when the desired bit rate is higher than the bit rate of a received TS signal of the DVB-H standard, the NULL packet remover 51 may refrain from removing NULL packets to output the received TS signal of the DVB-H standard as it is to the buffer 42. Stated another way, the removing function of the NULL packet remover 51 can be stopped as well. Specifically, the bit rate converting apparatus illustrated in Fig. 5 may comprise a rate determination unit 52. The rate determination unit 52 compares, for example, the predetermined bit rate stored in the memory unit 40 with the desired bit rate stored in the memory unit 43. Subsequently, the rate determination unit 52 generates a signal which indicates whether or not the desired bit rate is higher than the bit rate of a TS signal of the DVB-H standard input to the buffer 42. The NULL packet remover 51 can receive this signal from the rate determination unit 52 to determine whether or not to refrain from removing NULL packets.

### (Third Embodiment)

Fig. 6 generally illustrates a block diagram of an apparatus for converting the bit rate of a DVB-H signal in accordance with a third embodiment of the present invention. The bit rate converting apparatus illustrated in Fig. 6 comprises a burst passing unit 61 instead of the NULL packet remover 51 in Fig. 5. Also, an output unit 45 shown in Fig. 6 comprises a burst determination function 62, as compared with the output unit 45 shown in Fig. 5.

The burst passing unit 61 stores one PID of a program received by a receiver 14 (of a portable telephone, by way of example). The one PID is centered or specified by the user.
The burst passing unit 61 further stores ID's of packets (PSI/SI packets) (PAT, PMT, CAT, TSDT, NIT, BAT, SDT, EIT, RST, TDT, TOT, and INT) required to receive/reproduce a program. Among these PSI/SI packets, the PIDs of the PAT, CAT, TSDT, NIT, BAT, SDT, EIT, RST, TDT, TOT, and INT packets are fixed by the standard. The PMT packet may have a fixed ID, by way of example. Alternatively, the PID of PMT may be entered or specified by the user. Further alternatively, the PID of PMT may be extracted from the PMT packet by the burst passing unit 61.

The burst passing unit 61 outputs received packets (except for NULL packets though) only for a burst duration corresponding to a program currently received by the receiver 14. Fig. 7 illustrates an exemplary operation of the burst passing unit 61. Specifically, the burst passing unit 61 first determines whether or not the PID of a received packet is one PID of the program currently received by the receiver 14 (step 1). When the PID of the received packet is the one PID of the program currently received by the receiver 14 (when an affirmative response is shown at step 1), the burst passing unit 61 outputs the packet (step 1-1: the packet exists within the burst duration corresponding to the program currently received by the receiver 14). When a negative response is shown at step 1, the burst passing unit 61 executes step 1 for the PID of the next packet (step 1-2).

After step 1-1, the burst passing unit 61 determines whether or not the PID of the next packet is the PID of a packet which is required for the reception/reproduction of the program currently received by the receiver 14 (step 2). When an affirmative response is shown at step 2, the burst passing unit 61 outputs the packet (step 2-1: the packet exists within a burst duration corresponding to the program currently received by the receiver 14). After step 2-1, the burst passing unit 61 executes the operation of step 2 for the further next packet (step 2-2).

When a negative response is shown at step 2, the burst passing unit 61 further determines whether or not the packet is a NULL packet (step 3). When an affirmative response is shown at step 3, the burst passing unit 61 does not output the NULL packet, and executes the operation at step 2 for the further next packet (step 3-1). When a negative response is shown at step 3, the burst passing unit 61 does not output the packet (step 3-2: the packet does not exists within the burst duration corresponding to the program currently received by the receiver 14).

After step 3-2, the burst passing unit 61 determines whether or not the PID of the further next packet is one PID of the program currently received by the receiver 14 (step 4). When a negative determination is shown at step 4, the burst passing unit 61 executes the operation of step 4 for the further next packet (step 4-1: the packet does not exist within the burst duration corresponding to the program currently received by the receiver 14). When an affirmative determination is shown at step 4, the burst passing unit 61 executes the operation of step 2 for the further next packet (step 4-2: the packet exists within the burst duration corresponding to the program currently received by the receiver 14.

In such a way, the burst passing unit 61 outputs received packets (except for NULL packets, though) to the buffer 42 only during the burst duration corresponding to the program currently received by the receiver 14. Also, the burst passing unit 61 detects the beginning of the burst duration, and outputs the signal to the burst determination function 62.

The burst determination function 62 of the output unit 45 determines the burst duration corresponding to the program currently received by the receiver 14. Specifically, the burst determination function 62 comprises a counter, by way of example.

Incidentally, packets are stored, for example, in the memory unit 43 during a burst duration corresponding to a program currently received by the receiver 14. Also, the determination unit (for example, the rate determination unit 52) determines the number of packets which should exist during the corresponding burst duration from the desired bit rate shored in the memory unit 43 and the corresponding burst duration. The determination unit further outputs the number of packets which should exist during the burst duration to the counter 62.

The counter 62 stores the number of packets from the determination unit. Also, the counter 62 is applied with a signal indicative of the beginning of the burst duration from the burst passing unit 61. The counter 62 is reset at the time the beginning of the burst duration is detected, and counts the number of packets output from the output unit 45.

When the count value is equal to or smaller than the number of packets which should exist during the burst duration, the burst determination function 62 can determine the burst duration corresponding to the program currently received by the receiver 14. On the other hand, when the counter value indicates a value larger than the number of packets which should exist during the burst duration, the burst determination function 62 can determine that the burst duration is not present.

When the burst determination function 62 shows an affirmative determination, the output unit 45 monitors a threshold signal (signal indicating whether or not the capacity of the signal stored by the buffer 42 is equal to or higher than the threshold of the buffer 42) output from the buffer 42, and when the output unit 45 receives a packet from the buffer 42, the output unit 45 outputs this packet, and does not output a NULL packet from the NULL packet generator 46. When no packet is applied from the buffer 42, the output unit 45 outputs a NULL packet from the NULL packet generator.

When the burst determination function 62 determines a negative determination, the output unit 45 outputs NULL packets from the NULL packet generator 46 at all times.

In this way, the output unit 45 outputs packets from one of the buffer 42 and NULL packet generator 46 during the burst duration based on the read clock, and outputs packets from one of the NULL packet generator 46 in other durations except for the burst duration based on the read clock signal.

In addition to the removal of NULL packets, the burst passing unit 61 can remove programs other than a program currently received by the receiver 14. Accordingly, a lower limit to which the bit rate can be reduced by the bit rate converting apparatus illustrated in Fig. 6 is lower than the lower limit to the bit rate by the apparatuses shown in Figs. 4 and 5. Stated another way, the bit rate converting apparatus illustrated in Fig. 6 can support a lower desired bit rate.

Also, with the ability to hold a burst duration and an off-time possessed by source data (DVB-H signal input to the burst passing unit 61), the bit rate can be converted without rewriting a Delta-t value contained in the DVB-H signal.

It should be understood that the present invention is not limited to the illustrative embodiments described above, and those skilled in the art will be able to readily modify the illustrative embodiments described above without departing from the claims.

## Claims

1. A bit rate converting apparatus which does not have a function of rewriting a PCR value, comprising:
means (42) for receiving a TS signal of a DVB-H standard for storage in accordance with a first bit rate;
means (46) for sequentially generating NULL packets in accordance with a second bit rate; and
means (45) for outputting a packet which forms part of the stored TS signal from said means (42) and the NULL packet from said means (46) in accordance with the second bit rate.

2. A bit rate converting apparatus according to claim 1,
wherein:
when the capacity of the TS signal stored by said means (42) exceeds a predetermined capacity, said means (45) outputs the packet which forms part of the stored TS signal from said means (42), and
when the capacity of the TS signal stored by said means (42) does not exceed the predetermined capacity, said means (45) outputs the NULL packet from said means (46).

3. A bit rate converting apparatus according to claim 1, further comprising:
means (51) for receiving the TS signal of the DVB standard instead of said means (42), said means (51) configured to remove a NULL packet from the TS signal,
wherein said means (42) stores a signal from which the NULL packets have been removed by said means (51).

4. A bit rate converting apparatus according to claim 3, further comprising:
means (52) for determining whether or not the second bit rate is higher than the first bit rate,
wherein said means (51) refrains from removing the NULL packet, and outputs the received TS signal of the DVB-H standard as it is to said means (42) when the second bit rate is higher than the first bit rate.

5. A bit rate converting apparatus according to claim 1, further comprising:
means (61) for receiving the TS signal of the DVB-H standard instead of said means (42), said means (61) passing only a PSI/SI packet and a packet representative of a program which forms part of the TS signal,
wherein said means (42) stores a signal which has passed through said means (61).

6. A bit rate converting apparatus according to claim 5, further comprising:
means (52) for determining whether or not the second bit rate is higher than the first bit rate,
wherein said means (61) outputs the entire received TS signal of the DVB-H standard to said means (42) when the second bit rate is higher than the first bit rate.

7. A bit rate converting apparatus according to claim 5,
wherein:
said means (61) passes only packets during a burst duration.

8. A bit rate converting apparatus according to claim 5,
wherein:
said means (42) outputs packets which make up the stored TS signal from said means (42) during a burst duration.

9. A bit rate converting apparatus according to claim 8,
wherein:
said means (42) outputs only the NULL packet from said means (46) for a duration other than the burst duration.

10. A bit rate converting method comprising the steps of:
receiving a TS signal of a DVB-H standard in accordance with a first bit rate;
passing only a packet representative of a program which forms part of the TS signal, and a PSI/SI packet;
storing the passed packets;
sequentially generating NULL packets in accordance with a second bit rate; and
outputting one of the stored packet and the generated NULL packets in accordance with the second bit rate.
